(19) Europäisches Patentamt
European Patent Office
Office européen des brevets

(11) EP 0 530 761 B1

(12) EUROPEAN PATENT SPECIFICATION

(45) Date of publication and mention
of the grant of the patent:
**17.04.1996   Bulletin 1996/16**

(51) Int Cl.6: **H04N 3/12**, H04N 5/30,
G09G 3/34

(21) Application number: **92114969.6**

(22) Date of filing: **02.09.1992**

(54) **Partitioned frame memory for spatial light modulator**

Untergliederter Bildspeicher für räumlichen Lichtmodulator

Mémoire par titionné de trame pour un modulateur spatial de lumière

(84) Designated Contracting States:
**DE FR GB IT NL**

(30) Priority: **06.09.1991 US 756026**

(43) Date of publication of application:
**10.03.1993   Bulletin 1993/10**

(73) Proprietor: **TEXAS INSTRUMENTS
INCORPORATED
Dallas Texas 75265 (US)**

(72) Inventor: **Urbanus, Paul M.
Dallas, Texas 75248 (US)**

(74) Representative:
**Schwepfinger, Karl-Heinz, Dipl.-Ing.
Prinz & Partner,
Manzingerweg 7
D-81241 München (DE)**

(56) References cited:
**EP-A- 0 261 901        EP-A- 0 273 773
WO-A-92/09064**

**Description**

BACKGROUND OF THE INVENTION

A recent development in video display systems is the use of spatial light modulators, to take the place of raster-scan electronic beam devices. These modulators consist of an array of electronically addressable pixel elements. For display, light from each pixel is magnified and projected to a display screen by an optical system. The type of modulation depends on how the modulator is combined with an optical system.

A frequently used type of these modulators is the deformable mirror device, in which each pixel element is a tiny mirror, capable of separate mechanical movement in response to an electrical input. Incident light may be modulated in direction, phase, or amplitude by reflection from each pixel.

For many applications, the spatial light modulator is binary in the sense that each pixel element may have either of two states. The element may be off, which means that it delivers no light. Or, the element may be on, which means that it delivers light at a maximum intensity. To achieve a viewer perception of intermediate levels of light, various pulse width modulation techniques may be used. These techniques are described in EP-A-0507270 entitled "DND Architecture and Timing for Use in a Pulse-Width Modulated Display System".

Pulse width modulation uses various schemes for loading the modulator, including "bit-frame" loading, in which one bit per pixel for an entire frame is loaded at one time. Thus, for example, for 8-bit pixel resolution, the modulator is loaded eight times per frame, one pixel per frame at a time, with the load timing determined by the particular modulation technique being used. In one such method, the most significant bit is loaded for 1/2 of a frame period, the second most significant bit for 1/4, frame period, etc.

Implementation of pulse width modulation requires the use of a frame buffer for incoming data. Because the modulator receives data in bit-frames, it is necessary for the frame buffer to receive an entire image before data from that image can be transferred to the modulator. Thus, the frame buffer must be sufficiently large to permit one frame to be transferred to the modulator while the next frame is being input to the frame buffer.

To keep up with incoming data rates, the data connections to the frame buffer must be sufficiently wide and the read-in rate must be sufficiently high. The required data width, Z, and memory transfer rate, Y, may be calculated as a product, set equal to the incoming data rate, X:

$$X \text{ bits/second} = Y \text{ words/second} \times Z \text{ bits/word}$$

For example, where incoming video data represents 768 rows and 576 columns, with interlaced scanning, and is received at a rate of one line per 32 microseconds, the incoming data rate is 24 megapixels per second. For 12-bit pixels, this rate may also be expressed as 288 megabits per second. A typical maximum storage rate into memory is 1 word per 80 nanoseconds, or 12.5 megawords per second. Thus, the required word size is 23.04 bits per word. In other words, to keep up with incoming data, the frame buffer must receive at least 24 bits in parallel per memory cycle.

When wider words, and hence wider data interconnections are used, the result is that the system becomes more complicated and expensive. Also, the components of such systems are more difficult to integrate. A need exists for a technique for achieving these high data rates for video applications of binary spatial light modulators, while minimizing interconnections.

SUMMARY OF THE INVENTION

One aspect of the invention is a projection circuit for storing and displaying data representing rows and columns of a graphic image. The main components are a spatial light modulator and a frame memory. The spatial light modulator receives data representing rows of an image and reproduces the image from the data. The frame memory is a video random access memory, partitioned into more than one part. For example, there might be four parts, one part each for receiving data for upper left rows, upper right rows, lower left rows, and lower right rows. Each of these parts shares a common data input bus, and data for each of said parts is loaded into the frame memory at separate times in response to a select signal. Any other number of parts may be used, so long each part receives a data word at least as wide as the word size required to keep up with incoming data. Output data from all parts of the frame memory are delivered to the spatial light modulator in simultaneous downloading bursts.

A technical advantage of the invention is that it permits high data transfer rates for loading a light modulator from a frame buffer. As a result of partitioning and sharing input data lines, the frame buffer's input data rate may be less than its output data burst rate, so long as the average incoming and outgoing data rates are equal. The frame buffer accomplishes this high data rate without an undue increase in the number of data interconnections to the frame storage memory, and within constraints of memory transfer rates of conventional memory devices. This reduced size of the wiring reduces both material and assembly cost and increases system reliability. Also, the frame buffer memory and spatial light modulator may be integrated into a single unit having a minimal number of connections to an incoming data source.

BRIEF DESCRIPTION OF THE DRAWINGS

Figure 1 illustrates a receiver and projection display unit for a video display unit using spatial light modulation.

Figure 2 illustrates the frame buffer and spatial light modulator of Figure 1, and related control signals for the frame buffer.

Figure 3 illustrates a spatial light modulator having an upper and a lower pixel element array, each associated with an input unit and related control signals.

## DETAILED DESCRIPTION OF THE INVENTION

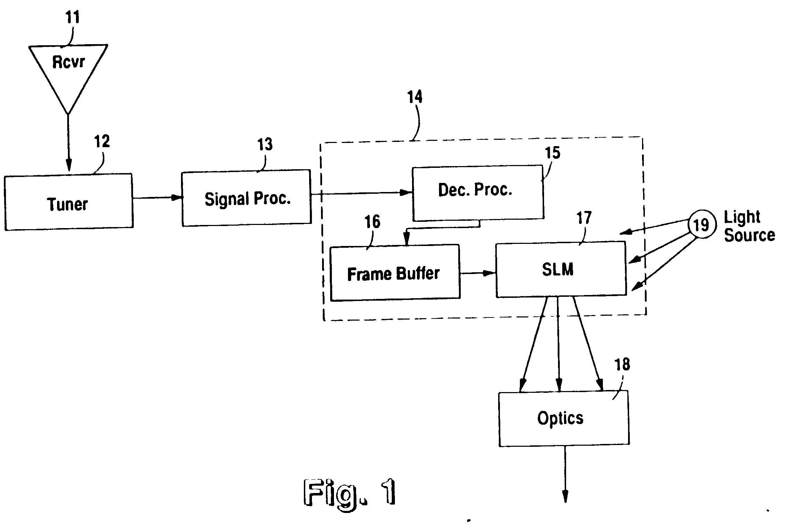

Figure 1 illustrates a video display system, with which the invention may be used. This system is only one application of the invention, and other applications may be implemented using the same concepts described below. For example, rather than a video signal, the projection unit 14 of Figure 1 could be part of a printer system or any other system in which an incoming signal representing image data is to be received and operated on.

Figure 1 shows a block diagram of a video display system, such as used in a television. A receiver 11 receives a television signal of some standardized format and passes it to tuner 12, which splits the signal into an audio and a video component. The audio portion of the signal will not be considered further herein. Tuner 12 passes the signal to a signal processor 13 for analog-to-digital conversion and other enhancements. The enhanced digital signal is then sent to projection system 14, which contains a decimation processor 15, a frame buffer 16, and a spatial light modulator (SLM) 17. The decimation processor 15 converts the signal to a form suitable for storage in frame buffer 16, such that complete frames of an image are gathered and stored. After a complete frame is stored, the data are passed to SLM 17. SLM receives light from a source 19, and generates an image via optics unit 18 for display to a viewer.

An example of a decimation processor is described in EP-A-0507270.

Other applications may use other types of processors, however, a common characteristic is the providing of digital data for frame buffer 16. For purposes of example herein, it is assumed that each pixel is represented by 12 bits of data.

Frame buffer 16 is comprised of video random access memory (VRAM). These VRAM devices solve the problem of access to a high resolution frame buffer by including an internal parallel-in/serial-out shift register that can be accessed independently from the rest of the memory unit. In one memory cycle, an entire row of pixel data is transferred from memory to the shift register. During read out from the shift register, the memory is free to be written into.

An example of a VRAM device is the TMS4161 integrated circuit, manufactured by Texas Instruments, Inc. The shift register is as wide as the memory array and can be parallel loaded by asserting a transfer signal while a row of memory is being read. The serial register has its own data clock, enabling it to transfer data out of the chip at high speeds. Other VRAM type devices may be used, with the essential characteristic being a configuration similar to a RAM, but with a parallel-in/serial-out data register connected to a second data port. Where standard commercially available VRAM devices are used, the size and number of VRAM devices needed are determined by factors such as the size of the pixel array and the required parallel data output.

SLM 17 is for purposes of this description, a deformable mirror device (DMD). As explained in the background of this patent application, these are binary devices, which may be modulated to provide the viewer with a perception of varying intensity or with color. An example of SLM 17 is the DMD device manufactured by Texas Instruments, Inc., in which each pixel mirror is associated with a memory cell having at least 1 bit of data storage, and all pixel elements are simultaneously switched.

However, the invention is not limited to the use of DMD's for SLM 17, and may be used with other binary spatial light modulators having addressable pixel elements. A common characteristic of a suitable SLM 17 is that its loading occurs a row at a time. Because the data stored in rows of each VRAM device are not necessarily coincident with rows of display data downloaded to SLM 17, the latter are referred to in terms of "display rows" as opposed to VRAM rows, when appropriate for clarity.

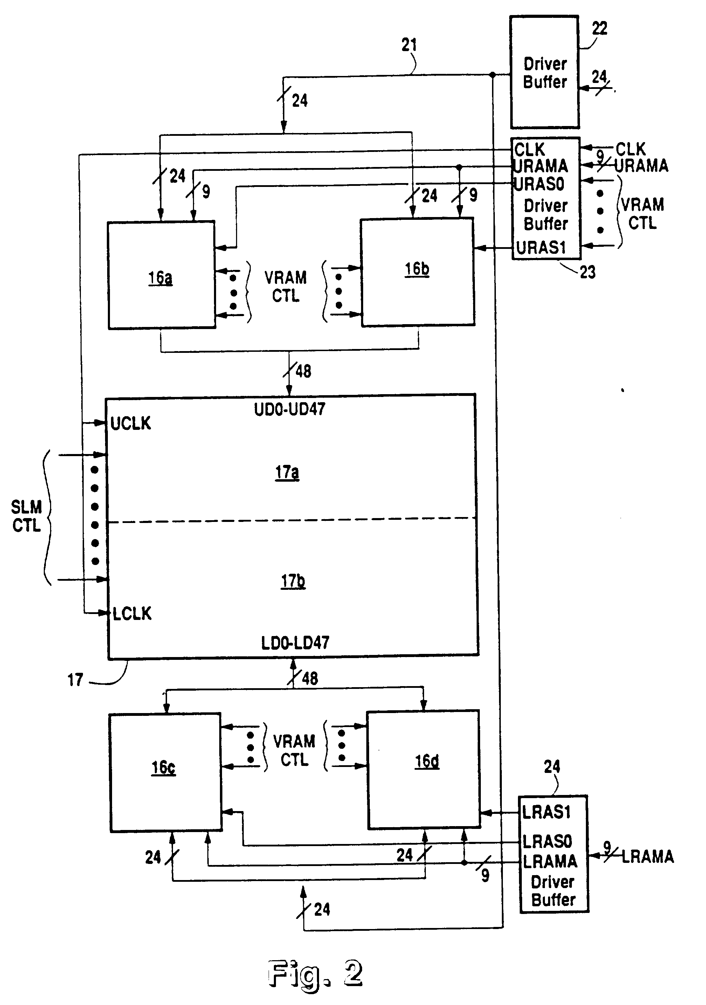

Figure 2 illustrates frame buffer 16 and SLM 17 in further detail. Frame buffer 16 is partitioned in accordance with the invention, and in this embodiment, has four parts: upper left frame buffer 16a, upper right frame buffer 16b, lower left frame buffer 16c, and lower right frame buffer 16d. This four-way partitioning includes both upper and lower and left and right partitioning, and as explained below, reduces the required width of data connections by a factor of four. However, as will be evident from the following discussion, two-way partitioning could also be implemented using upper and lower partitioning. In fact, frame buffer 16 may be partitioned into any integer number of partitions so long as the input bandwidth of each partition of frame buffer 16 is greater than or equal to the bandwidth of the incoming video data.

For purposes of example, SLM 17 is a 768 x 576 pixel array. However, the concepts as described herein can be implemented with any size array, with appropriate changes being made to the data widths described herein.

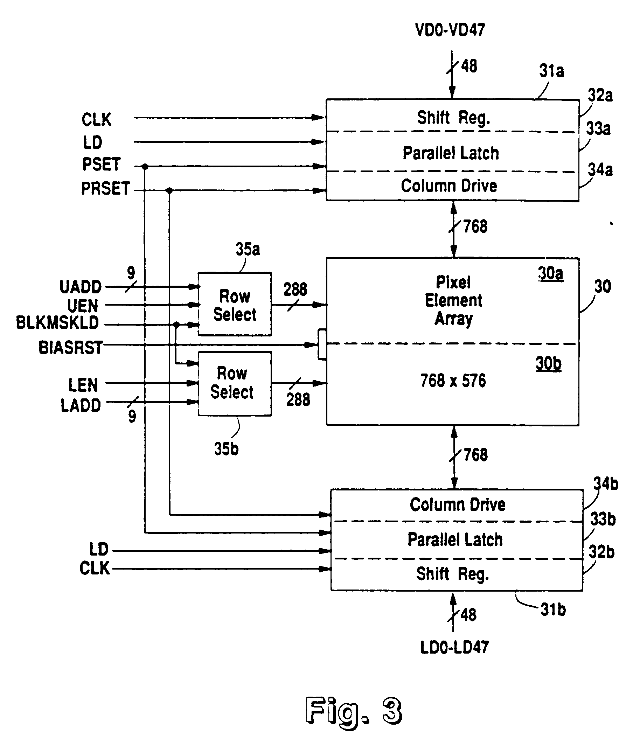

SLM 17 is divided into an upper part 17a and lower part 17b. As explained below in connection with Figure 3, SLM 17 receives data from frame buffer 16 simultaneously into 48 16-bit shift registers associated with the upper part 17a and 48 16-bit shift registers associated with the lower part 17b. Thus, the data connections to these two parts are each 48 bits wide.

Without partitioning, frame buffer 16 would require 96 input connections to match its output to SLM 17. However, partitioning permits narrower data input connections into frame buffer 16. For example, using the data rate calculations in the background of this application, the input data word must be at least 23.04 bits wide. Thus, frame buffer 16 may be partitioned into 4 parts, each having a 24-bit input line. Alternatively, frame buffer 16 could be partitioned into 6 parts with 16-bit lines or 2 parts with 48-bit lines. Physical device constraints of commercially available VRAM devices may affect addressability and hence may limit some of these options.

For a 768 x 576 pixel image, upper frame buffers 16a and 16b receive the upper 288 rows of video data, and lower frame buffers 16c and 16d receive the lower 288 rows. Video data is stored into the upper and lower parts of frame buffer 16 one line at a time. Thus, only one of the upper or lower parts is being loaded at any given time. As shown in Figure 2, this permits the upper and lower parts to use a common input data bus 21, which reduces data input connections to frame buffer 16 by a factor of 2. In the case of an integrated circuit, the input data pin count is halved.

The same concept as is used for upper and lower partitioning, may be used to load half rows into left and right parts of frame buffer 16. This further reduces the input connection line count by a factor of 2. As shown, each new partition requires a new control signal. However, because each partition may be loaded at a different time, partitioning does not increase the size of the input connection, i.e., the width of bus 21, to frame buffer 16.

A variety of partitioning configurations could be used, using the same concept of maintaining a minimum data input word size, while tying input lines together, and reading in data at different times for each part. As an additional example, frame buffer 16 might be partitioned three ways into left, middle, and right row data.

Where four-way partitioning is used, input bus 21 to frame buffer 16 branches into the same width bus to each upper and lower part, and further branches into the same width bus to each left and right part. In other words, the input busses of each of the four parts of frame buffer 16 may be wired together. As explained below, separate select signals (*RAS*) determine which part will receive data during any one time period. As shown in Figure 2, in the example of this description, input bus 21 is 24 bits wide.

A driver/buffer 22 receives incoming data from decimation processor 15, and drives it to input bus 21. Other driver/buffers 23 and 24 receive and drive various VRAM control signals. In Figure 2, those signals destined for upper parts of frame buffer 16 are identified with a "U", and those destined for the lower parts of frame buffer 16 are identified with a "L". Those that are common to all parts of frame buffer 16, and hence may be wired together are identified with a "UL".

The control signals include a common clock signal (CLK), an upper VRAM address (URAMA) and a lower VRAM address (LRAMA). The control signals also include a select signal for each part of frame buffer 16 (URAS0, URAS1, LRAS0, LRAS1). In addition to the clock signal, other common control signals include signals for controlling various VRAM functions, such as reading and writing. These signals are illustrated in Figure 2 as sharing a common input line into frame memory 16 via one of the driver buffers, i.e., driver buffer 23. Although not shown in Figure 2, these control signals are further communicated to each partition with appropriate communication lines.

Figure 3 illustrates SLM 17 in further detail. Although data is loaded into different parts of frame buffer 16 at different times, output data from frame buffer 16 is loaded into SLM 17 simultaneously into upper part 17a and lower part 17b. In the example of this description, the output from frame buffer 16 is delivered to SLM 17 in two sets of 48 lines, each line carrying one bit. One set of data lines is loaded to upper part 17a and the other set to lower part 17b. The loading of SLM 17 occurs in bit-frames, where one bit from each frame of video data is loaded row-by-row. A typical "burst" rate for reading data out of frame buffer 16 into SLM 17 is 30 megabits per second per wire input to SLM 17.

The upper part 17a and lower part 17b of SLM 17 each have an input unit 31a and 31b. Each input unit 31a and 31b has a shift register layer 32a and 32b, parallel latch 33a and 33b, and column driver 34a and 34b. Shift registers 32a and 32b receive the two sets of the 48-bit wide data word from the upper and lower parts of frame buffer 16. Each wire from frame buffer 16 is associated with one of 48 16-bit shift registers. In the case of a 768-bit row image after 16 clock cycles, an entire row of the image is stored in each shift register layer 32a and 32b. Shift register layers 32a and 32b are controlled by a common clock signal (CLK).

After shift register layers 32a and 32b are loaded, they each transfer their row of data to parallel latches 33a and 33b in a single clock cycle. Parallel latches 33a and 33b are configured as 48 blocks, each storing 16 bits of data. While the data is latched, the next row of data may be loaded into shift register layers 32a and 32b. Parallel latches 33a and 33b are controlled by common load, set, and reset signals (LD, PSET, and PRESET). Column drivers 34a and 34b drive 1 bit of row data to each column of pixel element arrays 30a and 30b.

Upper pixel element array 30a and lower pixel element array 30b are each in communication with a row selector 35a and 35b. Row selectors 35a and 35b are simple decoders, which each receive 9 bits of address data (UADD and LADD), which represent one of 288 rows to be filled in both the upper and the lower arrays 30a and 30b.

Thus, to fill all pixel elements of pixel element 30 of SLM 17, requires 16 clock cycles per row x 288 rows. Once all pixel memories of both upper and lower pixel element arrays 30a and 30b have been loaded, the states of the pixels change according to the stored data, simultaneously, in response to a common reset signal (BIASRST). Other SLM 17 control signals include upper and lower row addresses (UADD abd LADD), upper and lower row enables (UEN and LEN), and block mask load (BLKMSKLD).

## Claims

1. A display arrangement for storing and displaying data representing rows and columns of a graphic image, comprising:

    a spatial light modulator for receiving data representing rows of an image and for reproducing said image from said data;
    a video random access memory for storing incoming data, partitioned into more than one part, wherein each part receives a section of said incoming data, wherein each of said parts shares a common data input bus, means for loading said data for each of said parts into said memory at separate times in response to a select signal; and
    communication means for delivering an address to each part of said video random access memory.

2. The display arrangement of Claim 1, wherein said memory is partitioned into two parts, one part each for receiving upper rows and lower rows of display data.

3. The display arrangement of Claim 1, wherein said frame memory is partitioned into two parts, one part each for receiving right and left display row data.

4. The display arrangement of Claim 1, wherein said frame memory is partitioned into four parts, one part each for receiving data for upper left display rows, upper right display rows, lower left display rows, and lower right display rows.

5. The display arrangement of any preceding claim, wherein said spatial light modulator and said memory are fabricated as an integrated circuit.

6. The display arrangement of any preceding claim, wherein said spatial light modulator is a deformable mirror device having pixel elements, each associated with a pixel memory.

7. The display arrangement of any preceding claim, wherein said spatial light modulator is comprised of an input register layer, a parallel latch layer, and a pixel element array.

8. The display arrangement of any preceding claim, wherein said spatial light modulator is partitioned into an upper and lower pixel element array, and wherein said data representing upper and lower rows is delivered to said pixel element arrays at the same time.

9. The display arrangement of any preceding claim, wherein said frame memory is comprised of a number of video random access memory devices, each having a serial register for transferring said data to said spatial light memory, wherein each said serial register is as wide as a row of display data.

10. The display arrangement of any preceding claim, wherein write and read control signals and address lines of each part of said frame memory are tied to common input lines.

11. A display arrangement as claimed in any preceding claim and wherein said memory is a frame memory.

12. A display arrangement as claimed in Claim 11 and wherein each part of said memory receives a section of a video frame.

13. A display arrangement as claimed in any preceding claim and wherein data is downloaded from said memory to said spatial light modulator from all partitions simultaneously in data bursts.

14. A graphic image display system for converting data representing an image into modulated light, including a display arrangement as claimed in any preceding claim and further comprising:

    a receiver capable of receiving a signal containing video information;
    a tuner in communication with said receiver for receiving said signal from said receiver and for isolating the video component of said signal;
    a processor in communication with said tuner for converting said video component into a set of data for use with said spatial light modulator;
    a light source; and an optics system for projecting said image.

15. A method of using a video random access frame buffer memory with a spatial light modulator, comprising the steps of:

    activating separate select signals to a video random access frame memory, such that said memory is functionally partitioned into more than one part, one part each for receiving and storing a section of a frame of video data; and
    loading said frame buffer memory by delivering said data to each part at separate times via a shared data input bus, in response to said select signals; and
    delivering said video data from each part to a spatial light modulator at the same time in response to a common clock signal.

16. The method of Claim 15, wherein said step of loading said frame memory is accomplished by delivering upper and lower rows of display data to upper and lower parts of said frame memory, respectively.

17. The method of Claim 15, wherein said step of loading said frame memory is accomplished by delivering upper left, upper right, lower left, and lower right rows of display data to upper left, upper right, lower left, and lower right parts of said frame memory, respectively.

18. The method of Claim 15, and further comprising the step of delivering read and write control and address signals to each part of said frame memory via communication lines that share a common input to said frame memory.

**Patentansprüche**

1. Anzeigeanordnung zum Speichern und Anzeigen von Daten, die Zeilen und Spalten eines Graphikbildes repräsentieren, enthaltend:

   einen räumlichen Lichtmodulator für den Empfang von Daten, die Zeilen eines Bildes repräsentieren, sowie für die Wiedergabe des Bildes anhand der Daten;

   einen Video-Schreib/Lese-Speicher zum Speichern ankommender Daten, der in mehr als einen Teil aufgeteilt ist, wobei jeder Teil einen Abschnitt der ankommenden Daten empfängt und jeder der Teile von einem gemeinsamen Dateneingangsbus Gebrauch macht, mit Mitteln zum Laden der Daten für jeden der Teile in den Speicher an getrennten Zeitpunkten abhängig von einem Wählsignal; und

   Übertragungsmittel zum Liefern einer Adresse an jeden Teil des Video-Schreib/Lese-Speichers.

2. Anzeigeanordnung nach Anspruch 1, bei welcher der Speicher in zwei Teile unterteilt ist, jeweils einen Teil für den Empfang oberer Zeilen und unterer Zeilen der Wiedergabedaten.

3. Anzeigeanordnung nach Anspruch 1, bei welcher der Bildspeicher in zwei Teile unterteilt ist, jeweils einen Teil für den Empfang rechter und linker Anzeigezeilendaten.

4. Anzeigeanordnung nach Anspruch 1, bei welcher der Bildspeicher in vier Teile unterteilt ist, jeweils einen Teil für den Empfang von Daten für obere linke Anzeigezeilen, obere rechte Anzeigezeilen, untere linke Anzeigezeilen und untere rechte Anzeigezeilen.

5. Anzeigeanordnung nach einem vorhergehenden Anspruch, bei welcher der räumliche Lichtmodulator und der Speicher als integrierte Schaltung hergestellt sind.

6. Anzeigeanordnung nach einem vorhergehenden Anspruch, bei welcher der räumliche Lichtmodulator eine Ablenkspiegelvorrichtung mit Pixelementen ist, die jeweils einem Pixelspeicher zugeordnet sind.

7. Anzeigeanordnung nach einem vorhergehenden Anspruch, bei welcher der räumliche Lichtmodulator eine Eingangsregisterschicht, eine Parallel-Zwischenspeicherschicht und eine Pixelelementmatrix umfaßt.

8. Anzeigeanordnung nach einem vorhergehenden Anspruch, bei welcher der räumliche Lichtmodulator in eine obere und untere Pixelelementmatrix unterteilt ist und bei welcher die oberen und unteren zeilenrepräsentierenden Daten den Pixelelementmatrixen zur gleichen Zeit zugeführt werden.

9. Anzeigeanordnung nach einem vorhergehenden Anspruch, bei welcher der Bildspeicher eine Anzahl von Video-Schreib/Lese-Speichervorrichtungen umfaßt, die jeweils ein serielles Register zum Übertragen der Daten zu dem räumlichen Lichtspeicher enthalten, und bei welchem jedes serielle Register ebenso breit wie eine Anzeigedatenzeile ist.

10. Anzeigeanordnung nach einem vorhergehenden Anspruch, bei welcher Schreib- und Lesesteuersignale und Adressenleitungen jedes Teils des Bildspeichers an gemeinsame Eingangsleitungen gelegt sind.

11. Anzeigeanordnung nach einem vorhergehenden Anspruch, bei welcher der Speicher ein Bildspeicher ist.

12. Anzeigeanordnung nach Anspruch 11, bei welcher jeder Teil des Speichers einen Abschnitt eines Videobildes empfängt.

13. Anzeigeanordnung nach einem vorhergehenden Anspruch, bei welcher Daten aus dem Speicher zu dem räumlichen Lichtmodulator aus allen Teilen gleichzeitig in Datenblöcken übertragen werden.

14. Graphikbild-Anzeigesystem zum Konvertieren von ein Bild repräsentierenden Daten in moduliertes Licht mit einer Anzeigeanordnung nach einem vorhergehenden Anspruch, ferner enthaltend:

   einen Empfänger, der ein Videoinformationen enthaltendes Signal empfangen kann;

einen mit dem Empfänger in Verbindung stehenden Tuner zum Empfangen des Signals von dem Empfänger und zum Abtrennen der Videokomponente des Signals;

einen mit dem Tuner in Verbindung stehenden Prozessor zum Konvertieren der Videokomponente in eine Datengruppe für die Verwendung mit dem räumlichen Lichtmodulator;

eine Lichtquelle; und

ein Optiksystem zum Projezieren des Bildes.

15. Verfahren zur Anwendung eines Video-Schreib/Lese-Bildpufferspeichers bei einem räumlichen Lichtmodulator, enthaltend die Schritte:

Aktivieren getrennter Wellsignale zu einem Video-Schreib/Lese-Bildspeicher in der Weise, daß der Speicher funktionell in mehr als einen Teil unterteilt wird, jeweils einen Teil für das Empfangen und das Speichern eines Abschnitts eines Bildes aus Videodaten; und

Laden des Bildpufferspeichers durch Zuführen der Daten zu jedem Teil an getrennten Zeitpunkten über einen gemeinsam benutzten Dateneingangsbus in Abhängigkeit von den Wählsignalen; und

Zuführen der Videodaten aus jedem Teil zu einem räumlichen Lichtmodulator am gleichen Zeitpunkt in Abhängigkeit von einem gemeinsamen Taktsignal.

16. Verfahren nach Anspruch 15, bei welchem der Schritt des Ladens des Bildspeichers ausgeführt wird, indem obere und untere Anzeigedatenzeilen oberen bzw. unteren Teilen des Bildspeichers zugeführt werden.

17. Verfahren nach Anspruch 15, bei welchem der Schritt des Ladens des Bildspeichers ausgeführt wird, indem obere linke, obere rechte, untere linke und untere rechte Anzeigedatenzeilen oberen linken, oberen rechten, untere linken bzw. unteren rechten Teilen des Bildspeichers zugeführt werden.

18. Verfahren nach Anspruch 15, ferner enthaltend den Schritt des Zuführens von Lese- und Schreibsteuer- und Adressensignalen zu jedem Teil des Bildspeichers über Übertragungsleitungen, die einen Eingang des Bildspeichers gemeinsam benutzen.

**Revendications**

1. Dispositif d'affichage pour mémoriser et afficher des données représentant des lignes et des colonnes d'une image graphique, comprenant :

un modulateur spatial de lumière pour recevoir des données représentant des lignes d'une image et pour reproduire ladite image à partir desdites données;
une mémoire vidéo à accès direct pour mémoriser des données qui arrivent, subdivisée en plus d'une partie, chaque partie recevant une section desdites données qui arrivent, lesdites parties utilisant en commun un bus commun d'entrée de données, des moyens pour charger lesdites données pour chacune desdites parties dans ladite mémoire à des instants séparés en réponse à un signal de sélection; et
des moyens de communication pour envoyer une adresse à chaque partie de ladite mémoire vidéo à accès direct.

2. Dispositif d'affichage selon la revendication 1, dans lequel ladite mémoire est divisée en deux parties, dont chacune sert à recevoir des lignes supérieures et des lignes inférieures de données d'affichage.

3. Dispositif d'affichage selon la revendication 1, dans lequel ladite mémoire de trames est divisée en deux parties, chaque partie servant à recevoir des données de lignes d'affichage de droite et des données de lignes d'affichage de gauche.

4. Dispositif d'affichage selon la revendication 1, dans lequel ladite mémoire de trames est divisée en quatre parties, dont chacune sert à recevoir des données pour des lignes d'affichage supérieures de gauche, des lignes d'affichage supérieures de droite, des lignes d'affichage inférieures de gauche et des lignes d'affichage inférieures de droite.

5. Dispositif d'affichage selon l'une quelconque des revendications précédentes, dans lequel ledit modulateur spatial de lumière et ladite mémoire sont fabriqués sous la forme d'un circuit intégré.

6. Dispositif d'affichage selon l'une quelconque des revendications précédentes, dans lequel ledit modulateur spatial de lumière est un dispositif à miroirs déformables comprenant des pixels associés chacun à une mémoire de pixels.

7. Dispositif d'affichage selon l'une quelconque des revendications précédentes, dans lequel ledit modulateur spatial de lumière est constitué par une couche de registre d'entrée, une couche de verrouillage parallèle et un réseau de pixels.

**8.** Dispositif d'affichage selon l'une quelconque des revendications précédentes, dans lequel ledit modulateur spatial de lumière est subdivisé en un réseau de pixels supérieurs et un réseau de pixels inférieurs, et lesdites données représentant les lignes supérieures et les lignes inférieures sont envoyées simultanément auxdits réseaux de pixels.

**9.** Dispositif d'affichage selon l'une quelconque des revendications précédentes, dans lequel ladite mémoire de trames est constituée par un certain nombre de dispositifs de mémoire vidéo à accès direct, dont chacun comporte un registre série pour transférer lesdites données à ladite mémoire spatiale de lumière, chacun desdits registres série possédant une largeur égale à une ligne de données d'affichage.

**10.** Dispositif d'affichage selon l'une quelconque des revendications précédentes, dans lequel des signaux de commande d'enregistrement et de lecture et des lignes d'adresses de chaque partie de ladite mémoire de trames sont réunis à des lignes communes d'entrée.

**11.** Dispositif d'affichage selon l'une quelconque des revendications précédentes, et dans lequel ladite mémoire est une mémoire de trames.

**12.** Dispositif d'affichage selon la revendication 11, et dans lequel chaque partie de ladite mémoire reçoit une section d'une trame vidéo.

**13.** Dispositif d'affichage selon l'une quelconque des revendications précédentes, et dans lequel des données sont téléchargées depuis ladite mémoire dans le modulateur spatial de lumière simultanément à partir de toutes les partitions, sous la forme de rafales de données.

**14.** Système d'affichage d'images graphiques servant à convertir des données représentant une image en une lumière modulée, comprenant un dispositif d'affichage selon l'une quelconque des revendications précédentes et comprenant en outre :

un récepteur apte à recevoir un signal contenant une information vidéo;
un syntoniseur en communication avec ledit récepteur pour recevoir ledit signal dudit récepteur et isoler la composante vidéo dudit signal;
un processeur en communication avec ledit syntoniseur pour convertir ladite composante vidéo en un ensemble de données destinées à être utilisées avec ledit modulateur spatial de lumière;
une source de lumière; et
un système optique pour projeter ladite image.

**15.** Procédé d'utilisation d'une mémoire tampon vidéo de trames vidéo à accès direct comportant un modulateur spatial de lumière, comprenant les étapes consistant à :

envoyer des signaux de sélection séparés à une mémoire de trames vidéo à accès direct, de telle sorte que ladite mémoire est divisée fonctionnellement en plus d'une partie, chaque partie servant à recevoir et mémoriser une section d'une trame de données vidéo; et
charger ladite mémoire tampon de trames par l'envoi desdites données à chaque partie à des instants séparés par l'intermédiaire d'un bus d'entrée de données, utilisé en commun, en réponse auxdits signaux de sélection; et
délivrer simultanément lesdites données vidéo à partir de chaque partie à un modulateur spatial de lumière en réponse à un signal d'horloge commun.

**16.** Procédé selon la revendication 15, selon lequel ladite étape de chargement de ladite mémoire de trames est exécutée par l'envoi de lignes supérieures et de lignes inférieures de données d'affichage respectivement à des parties supérieure et inférieure de ladite mémoire de trames.

**17.** Procédé selon la revendication 15, selon lequel ladite étape de chargement de ladite mémoire de trames est exécutée par l'envoi de lignes supérieures gauche, de lignes supérieures droite, de lignes inférieures gauche et de lignes inférieures droite de données d'affichage respectivement à des parties supérieure gauche, supérieure droite, inférieure gauche et inférieure droite de ladite mémoire de trame.

**18.** Procédé selon la revendication 15, comprenant en outre l'étape consistant à envoyer des signaux de commande de lecture et d'écriture et des signaux d'adresse à chaque partie de ladite mémoire de trames par l'intermédiaire de lignes de communication qui utilisent en commun une entrée commune de ladite mémoire de trames.

Fig. 1

Fig. 2

Fig. 3